# EUROPÄISCHE PATENTANMELDUNG

(11) **EP 2 241 610 A2**
(43) Veröffentlichungstag der Anmeldung: **20.10.2010**
(21) Anmeldenummer: 10003910.6
(22) Anmeldetag: 13.04.2010
(51) Int. Cl.: C10L 5/44, B01J 2/22, B01J 2/26

(54) **Verfahren und Anlage zur Herstellung von Pellets aus Biomasse in einer Pelletierpresse zur Verwendung als Brennmaterial in Feuerstellen**

(30) Priorität: 13.04.2009 DE 102009016470
(71) Anmelder: Dieffenbacher GmbH + Co. KG, 75031 Eppingen (DE)
(72) Erfinder: von Haas, Gernot, Dr., 69123 Heidelberg (DE)
(74) Vertreter: Hartdegen, Anton

(57) **Zusammenfassung**

Die Erfindung betrifft ein Verfahren und eine Anlage zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und die Biomasse (1) nach der Aufbereitung in einem Biomassebunker (1) gelagert wird. Die Erfindung besteht im Ablauf folgender Verfahrensschritte: die Biomasse (1) wird aus dem Biomassebunker (3) in eine Streuvorrichtung (6) ausgetragen, mittels der Streuvorrichtung (6) wird auf einem Formband (7) eine Matte (8) aus der Biomasse (1) mit einem im wesentlichen gleichmäßigen Flächengewicht gebildet, die auf dem Formband (7) hergestellte Matte (8) wird mittels einer Untersuchungsvorrichtung (11) auf fehlerbehaftete Stellen (25) und/oder Fremdkörper (26) untersucht und die Matte (8) wird einer Pelletierpresse (2) zugeführt, wobei zumindest Teile der Matte (8) oder ein Abschnitt der Matte (8) mit fehlerbehafteten Bereichen (25) und/oder Fremdkörpern (26) vor der Pelletierpresse (2) aus dem Verfahren zur Herstellung von Pellets (9) ausgeschieden werden.

## Beschreibung

Die Erfindung betrifft ein Verfahren zur Herstellung von Pellets aus aufbereiteter Biomasse in einer Pelletierpresse zur Verwendung als Brennmaterial in Feuerstellen nach dem Oberbegriff des Anspruches 1. Weiter betrifft die Erfindung eine Anlage zur Herstellung von Pellets aus aufbereiteter Biomasse in einer Pelletierpresse zur Verwendung als Brennmaterial in Feuerstellen nach dem Oberbegriff des Anspruches 12.

Die Herstellung von Pellets, auch Presslinge oder Granulat genannt, aus Feingut oder verdichtetem und/oder aufgeschmolzenem Material ist bereits lange bekannt. Brikettpressen haben zwischen zwei Walzen, wobei entweder eine oder beide als Matrize ausgearbeitete waren, Material verdichtet und zu Briketts zur Verfeuerung geformt. In der Kunststoffindustrie oder der Tierfutter verarbeitenden Industrie ist die Pelletierung mittels Extrudern und Lochscheiben, ggf. mit nachfolgenden Schneidvorrichtungen, ebenfalls hinreichend bekannt. Die Herstellung von Pellets aus vorzugsweise zerkleinerter Biomasse, wie Sägespäne, Staub oder dergleichen ist ebenfalls bereits hinreichend bekannt und wird im Bereich der erneuerbaren Energien als zukunftsweisende Technologie für den Klimaschutz, besonders in Europa, propagiert.

Derzeit wird Biomasse nach einer Aufbereitung (Zerkleinerung, Siebung, Trocknung ...) in Biomassebunkern gelagert und anschließend mit Dosiervorrichtungen ausgetragen und einer Pelletierpresse zugeführt. Üblicherweise werden als Dosiervorrichtungen Schneckenförderer verwendet, die aber nicht dazu geeignet sind mehrere große Pelletierpressen gleichzeitig mit konstantem Materialfluss zu beschicken. Es muss also je Schneckenförderer zumindest eine Pelletierpresse, meist eine Kollerpresse mit Ringmatrize oder eine Doppelwalzenpresse, angeordnet sein. Im Wesen der Schneckenförderer liegt es, die Biomasse, die bereits zu einem gewissen Grad durch das Eigengewicht während der Lagerung im Biomassenbunker verdichtet worden ist, noch zusätzlich während der Förderung zu verdichten und einer Pelletierpresse zuzuführen. Gerade aber Materialballungen erschweren eine konstante Zugabe zu den Pelletierpressen, da diese im Extremfall stückig aus der Förderung austreten. Sie können sogar zu Problemen im Einlauf von Pelletierpressen bzw. zur Minderung des maximalen Durchsatzes pro Stunde führen, wenn die Materialballungen nicht mehr oder nur schwer durch die Pelletierpressen verkleinert werden können und beispielsweise durch ihre Größe den Einlauf der Pelletierpresse blockieren und den Zustrom an Biomasse in den Pressspalt be- oder sogar verhindern. Gleichzeitig sorgt eine stückige Förderung für eine ungleichmäßige Beschickung der Pelletierpresse, was sich je nach Art der Pelletierpresse in erhöhtem Verschleiß oder Energieaufwand bemerkbar macht, wenn unregelmäßige Antriebs- bzw. Verdichtungskräfte mit Energie versorgt werden müssen oder Zuhaltevorrichtungen oder Lagerungen an Wellen über Gebühr belastet werden. Ein weiteres Problem stellt die Separierung der Biomasse im Biomassebunker bzw. während der Dosierung zur Pelletierpresse dar. Durch die Förderung ergibt sich das Problem, dass sich so genannte Nester an einheitlichem Material, beispielsweise Staubnester neben Grobnestern an Biomasse bilden. Ein optimaler Pellet und dessen Herstellung zeichnet sich aber besonders dadurch aus, dass in einem Pellet gleiche Mengen an Fein- und Grobanteilen vorhanden sind, die sich gegenseitig binden. Es ergibt sich weiter bei einer großindustriellen Produktionsplanung das Problem, dass bei einer Vergrößerung einer Doppelwalzenpresse oder einer Kollerpresse die zuführende Schneckenförderung um einen übertriebenen Faktor größer werden müsste, um eine ordentliche Beschickung zu ermöglichen, oder es müssen mehrere Schneckenförderungen parallel für eine große Pelletierpresse eingerichtet werden. Bei beiden Lösungen erhöht sich signifikant die Ausfallwahrscheinlichkeit und es entstehen hohe Beschaffungskosten für die Anlagentechnik, insbesondere auch für die Steuerung- und Regelungstechnik. Fällt nämlich nur eine Dosierförderung aus, muss die gesamte Anlage abgeschaltet werden, da ansonsten Teilbereiche der Pelletierpresse ohne Material arbeiten würde, was erhöhten Verschleiß bewirkt.

Nach bekannten Herstellungsverfahren wird die Biomasse während der Aufbereitung getrocknet, meist in einer Klassiervorrichtung gesiebt und durch einen Schwerkraftabscheider geschickt. Letztere Anwendung soll die Absonderung von höherdichtem Material, wie Steine, Sand oder Verklumpungen bewirken. Auch eine mehrstufige Schwerkraftabscheidung oder sonstige Abscheidungsverfahren haben aber den Nachteil, dass diese keinen 100% Wirkungsgrad aufweisen, sondern gerade bei einer großindustriellen Nutzung und großen Durchsätzen an Biomasse pro Stunde (mehr als 15 to/h) immer mal wieder Sandkörner oder andere hochdichte Materialien in der Biomasse verbleiben. Auch ist es möglich, dass in den Anlagenteilen nach der Abscheidung, also im oder nach einem Biomassebunker, durch Abrieb oder Verschleiß von Anlagenteilen Fremdkörper in den Produktionsprozess eintreten, die zu einer Schädigung der Pelletierpressen führen können. Bereits ein grobes Sandkorn kann während der Durchpressung der Biomasse durch eine Walzenpresse oder eine Ringmatrize mit zugehörigen Kollerwalzen dazu führen, dass die Pressformen beschädigt werden. Hochwertige Pellets, die aber anschließend pneumatisch in Lager und/oder Fahrzeuge und hiernach wiederum in Lagerräume beim Endverbraucher pneumatisch verbracht werden, benötigen eine sehr geradlinige Oberflächenstruktur und werden vorzugsweise durch das Abriebverhalten zertifiziert. Erhält nun eine Lochbohrung einer Ringmatrize oder eine Oberflächenmatrize einer Walzenpresse einen auch nur geringfügigen Schaden, werden in der Folge serienweise Pellets produziert die eine leichte Erhöhung aufweisen. Diese Erhöhung reicht aus um einerseits eine Kerbwirkung zu verursachen und andererseits als Kerbgeber gegenüber anderen vorbeiströmenden Pellets zu wirken. Es ergibt sich, dass die Lebensdauer der Matrizen einer jeden Pelletierpresse signifikant davon abhängen, dass die Biomasse keine Fremdkörper oder andere schädlichen Stoffe enthält, die während der Pelletierung Schaden oder zumindest Eindruckspuren an den Matrizen hinterlassen könnten.

Die Aufgabe der Erfindung besteht darin ein Verfahren zur Herstellung von Pellets aus Biomasse zu schaffen, insbesondere bei der großindustriellen Herstellung, in dem die Biomasse nach der Aufbereitung in einer einfachen aber effektiven Art und Weise auf Fremdkörper, wie Steinchen, Sand, Inhomogenitäten, Dichteüberhöhungen oder dergleichen vor einer Pelletierpresse geprüft werden kann um noch eine rechtzeitige Ausscheidung der Fremdkörper vor einer Pelletierpresse zu ermöglichen und um Schäden an den Matrizen und/oder den Kollerwalzen einer Pelletierpresse zu verhindern. Gleichzeitig soll eine möglichst geringe Produktionsunterbrechung durch die notwendige Ausscheidung hervorgerufen werden und die Biomasse in einer geordneten und gleichmäßigen Form einer Pelletierpresse zugeführt werden können.

Im weiteren und besonderen Ausführungsfall soll die Aufgabe für das Verfahren und eine eigenständige oder als zur Durchführung des Verfahrens geeignete Anlage darin bestehen eine kontinuierliche und über eine beliebig große Breite eine optimale, gleichmäßige und unseparierte Beschickung einer Pelletierpresse mit Biomasse ohne Fremdkörper sicherzustellen.

Die Lösung der Aufgabe für ein Verfahren besteht im Ablauf folgender Verfahrensschritte: die Biomasse wird aus dem Biomassebunker in eine Streuvorrichtung ausgetragen, anschließend wird mittels der Streuvorrichtung 6 auf einem Formband eine Matte aus der Biomasse mit einem im wesentlichen gleichmäßigen Flächengewicht gebildet und die auf dem Formband hergestellte Matte wird mittels einer Untersuchungsvorrichtung auf fehlerbehaftete Stellen und/oder Fremdkörper untersucht und nachfolgend wird die Matte einer Pelletierpresse zugeführt, wobei zumindest Teile der Matte oder ein Abschnitt der Matte mit fehlerbehafteten Stellen und/oder Fremdkörpern vor der Pelletierpresse aus dem Verfahren zur Herstellung von Pellets ausgeschieden werden.

Die Lösung der Aufgabe für eine Anlage zur Herstellung von Pellets besteht darin, dass im Herstellungsablauf nach dem Biomassebunker eine Streuvorrichtung und ein austragsseitig der Streurichtung in Fallrichtung horizontal endlos umlaufendem Formband zur Erstellung einer Matte mit einem im Wesentlichen gleichmäßigen Flächengewicht angeordnet ist und dass einer Untersuchungsvorrichtung für fehlerbehaftete Bereiche und/oder für Fremdkörper der Matte im Bereich des Formbandes und dass zur Ausscheidung der fehlerbehafteten Bereiche und/oder der Fremdkörper vor der Pelletierpresse zumindest eine Vorrichtung zur Ausscheidung von zumindest Teilen der Matte oder eines ganzen Abschnittes der Matten angeordnet sind.

Besonders vorteilhaft hat sich herausgestellt, dass Kleinstkörper mit einer Größe von 1 mm³ und einer höheren Dichte gegenüber der Biomasse sich sicher mit einer Durchstrahlungsvorrichtung, vorzugsweise Gamma- oder Röntgenstrahlung, erkennen lassen. Dabei löst die Durchstrahlungsvorrichtung vorzugsweise das Flächengewicht der gestreuten Matte auf dem Formband auf und ermittelt in einem möglichst kleinen Raster, beispielsweise 1 mm², das Flächengewicht, während die kontinuierlich gestreute Matte durch die Durchstrahlungsvorrichtung durchläuft. Die Dichte von verwendbarem Holz (nicht als Schüttgut oder aufbereitete Biomasse vorliegend) liegt ungefähr bei 400 bis 800 kg/m³ und übliche Fremdkörper wie Sand weisen eine Dichte von über 1,5 x 10³ kg/m³ auf. Ist beispielsweise das reguläre Flächengewicht einer gestreuten und lockeren Matte (enthält viel Luft) auf einem Formband beispielsweise 2 kg/m² bei einer Mattenhöhe von 13 mm und einer theoretischen Schüttdichte von 155 kg/m³ der Biomasse, dann würde ein Fremdkörper von 1 mm³ Größe und einer Dichte von 2 x 10³ kg/m³ innerhalb der Matte das Flächengewicht in einem Messfeld von einem Quadratmillimeter signifikant und deutlich messbar für Durchstrahlungsvorrichtungen steigern.

Damit ist es für eine Durchstrahlungsvorrichtung durchaus detektierbar, wenn während der Aufbereitung der Biomasse ein Fremdkörper kleinster Form nicht korrekt ausgeschieden worden ist oder ein anderer Fremdkörper nachträglich noch in die Biomasse gelangt ist.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: eine schematische Darstellung einer produzierenden Anlage zur Herstellung von Pellets nach dem Stand der Technik,
- Figur 2: eine schematische Darstellung einer erfindungsgemäßen Anlage, insbesondere zur Durchführung des Verfahrens,
- Figur 3: eine vergrößerte Darstellung einer Auflösevorrichtung in Fallrichtung nach einem Formband nach Figur 2,
- Figur 4: eine vergrößerte Darstellung einer alternativen Auflösevorrichtung an der Austragsseite eines Formbandes mit Darstellung verschiedener Alternativen zur Aussonderung von fehlerbehafteten Stellen der Matte, respektive der Biomasse, und/oder von Fremdkörpern,
- Figur 5: eine vergrößerte Darstellung von Variationen der Auflösewalzen einer Auflösevorrichtung nach Figur 2 und
- Figur 6: eine Variante der Pelletherstellung mit einer besonders bevorzugten Ausführungsform einer Pelletierpresse mit außen anliegenden Kollerwalzen an einer rotierenden Ringmatrize und einer optimalen Verteilung der Biomasse über die Länge und Breite der Pelletierpresse durch das Formband und einer nachfolgenden Auflösevorrichtung in Verbindung mit einer Untersuchungsvorrichtung für die aus Biomasse bestehenden Matte auf dem Formband.

Der Ablauf der Herstellung von Pellets nach dem Stand der Technik stellt sich nach Figur 1 wie folgt dar. Aufbereitete und gesichtete Biomasse 1 wird in einem Biomassebunker 3 gelagert und ausgetragen. Dies kann mit einer Zwischenförderung geschehen oder direkt mit einer Dosiervorrichtung 4, die nach Figur 1 als eine Dosierschnecke 19 ausgebildet ist. Die Biomasse 1 kann in der Dosierschnecke 19 nach Bedarf mit Dampf durch eine Bedampfungseinrichtung 13 behandelt werden oder ggf. auch in einer Zwischenstation auf fehlerhafte Stellen, definiert durch für eine Pelletierpresse gefährliche Fremdkörper, untersucht werden. Im Austragsbereich fällt die Biomasse aus der Dosierschnecke 19 heraus und wird nun in diesem Beispiel mit einer aus zwei Walzen bestehenden Pelletierpresse 2 zu Pellets 9 verpresst.

Nach Figur 2 besteht die Dosiervorrichtung 4 nicht aus einer Dosierschnecke 19, sondern aus einer Streuvorrichtung 6, die die Biomasse 1 mit einem möglichst gleichmäßigen Flächengewicht auf einem Formband 7 ablegt bzw. abstreut. Bereits hier erfolgt eine optimale Auflösung und eine lockere Ablage der Biomasse 1 auf einem Zwischenförderer, dem Formband 7. In vorteilhafter Weise liegt nun die Biomasse 1 in einer nach dem Flächengewicht gleichmäßigen Matte 8 vor und kann, je nach Formbandbreite und damit über eine beliebige Breite einer beispielsweise übergroßen Pelletierpresse mit einem gleichmäßigen Flächengewicht zugeführt werden. Vorzugsweise ist eine Steuer- oder Regelungsvorrichtung (nicht dargestellt) vorgesehen, die für einen optimalen Eintrag der Biomasse 1 auf dem Formband 7 in die Pelletierpresse in Abhängigkeit vom möglichen Herstellungsvolumen bzw. der Umdrehungszahl der Walzenpresse oder einer Kollerpresse sorgt. Auch hier kann eine Bedampfungseinrichtung 13 vorgesehen sein, die vorzugsweise das Formband 7 und die Matte 8 durchströmt, wobei in diesem Fall das Formband 7 als ein Siebband ausgeführt ist. In vorteilhafter Weise kann die Matte 8 auf dem Formband mittels einer Untersuchungsvorrichtung 11, bevorzugt eine Wiegevorrichtung, oder besonders bevorzugt eine Durchstrahlungsvorrichtung zur Ermittlung des Flächengewichts der Matte 8, untersucht werden, um Unregelmäßigkeiten in der Biomasse 1 zu ermitteln. Diese sind beispielsweise fehlerbehaftete Bereiche 25 der Matte 8 und/oder Fremdkörper 26 und/oder Inhomogenitäten und/oder Dichteüberhöhungen mit schädlichen Eigenschaften für die Pelletierpresse 2. Besonders mit einer Durchstrahlungsvorrichtung als Untersuchungsvorrichtung 11 können Flächengewichtsunterschiede ermittelt werden, die durch ein einzelnes Sandkorn einer Größe eines Kubikmillimeters versucht werden, da ein hohe Auflösung, gerade bei Durchstrahlungsvorrichtungen möglich ist und der Flächengewichtsunterschied eines Sandkorns, das bei der Aufbereitung durch eine Siebung oder Schwerkraftabscheidung nicht entfernt worden ist, gegenüber der Biomasse 1 der Matte 8 detektierbar ist.

In einem bevorzugten Ausführungsbeispiel wird die abgeworfene Matte 8 nochmals einer Auflösevorrichtung 5 zugeführt, bevor die Biomasse 1 in die Pelletierpresse 2 eintritt und zu Pellets 9 verpresst wird. Dies ist insbesondere sinnvoll, wenn mit einer Vorpresse 12 vor der Untersuchungsvorrichtung 11 die Matte 8 verdichtet worden ist, kann aber auch grundsätzlich durchgeführt werden. Im Falle eines ermittelten fehlerhaften Bereichs 25 der Matte 8, wird diese in einen Abfallschacht 16 entsorgt, indem das Formband 7 durch einen Formbandrückzug 17 den Abwurfbereich der Matte 8 verändert.

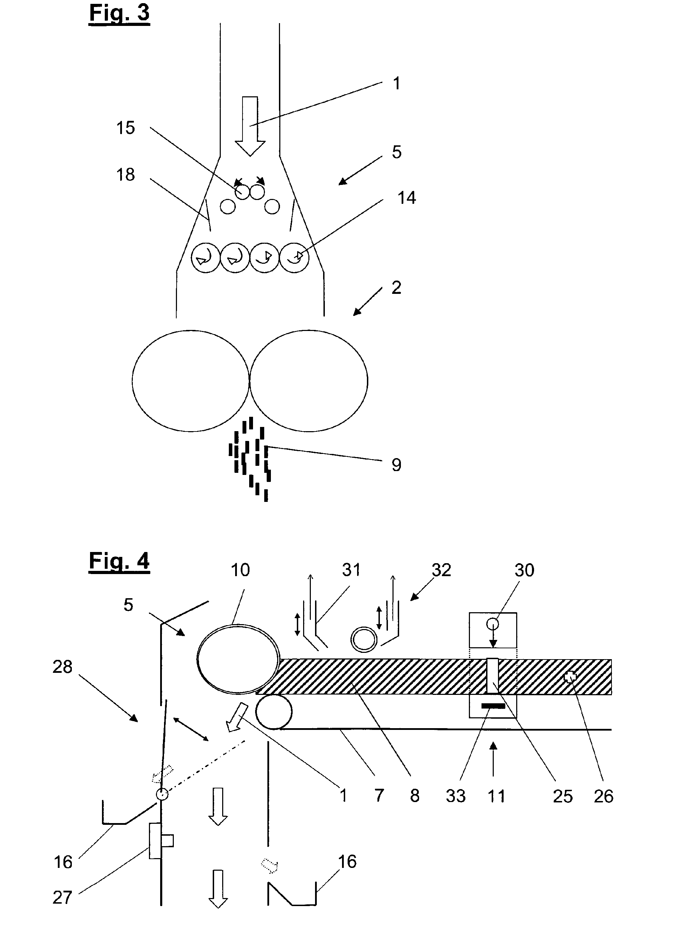

In Figur 3 ist eine vergrößerte Darstellung der Auflösevorrichtung 5 dargestellt, die zumindest aus einer Speichenwalze 14, hier aus vier Speichenwalzen 14 besteht. Für eine Verbesserung der Auflösung kann in Fallrichtung vor den Speichenwalzen 14 noch zumindest eine Vortragswalze 15 vorgesehen sein, in diesem bevorzugten Ausführungsbeispiel sind es vier Vortragswalzen 15, die gestuft für eine Vorseparierung sorgen. Die Drehrichtung der Speichenwalzen ist beispielhaft eingezeichnet.

Figur 4 zeigt eine vergrößerte Darstellung einer anderen Ausführungsform der Auflösevorrichtung 5, die an einem Formband 7 nach Figur 2 angeordnet ist. Dabei rotiert eine Fräswalze 10 mit angemessener Geschwindigkeit in der Zeichnung im Uhrzeigersinn und vereinzelt direkt am Ende der Dosiervorrichtung 4 die Matte 8. Durch die Auflösevorrichtung 5 wird die Biomasse 1 über eine vorgegebene Fläche verteilt und anschließend der Pelletierpresse 2 gleichmäßig zugeführt. Vorzugsweise wird nur Biomasse 1 verwendet, die während der Aufbereitung auf eine Größe über 0,3 mm Siebmaschenweite gesichtet wird.

Wie weiter aus Figur 4 zu entnehmen ist, gibt es verschiedene kombinierbare Möglichkeiten, um Teile der Matte 8 oder einen ganzen Abschnitt der Matte 8 aus dem Produktionsprozess zu entfernen und in einen Abfallschacht 16 zu überführen. Dazu können oberhalb des Formbandes in der vertikalen oder winkelig hierzu mittels Stelltrieben höhenverstellbare Absaugvorrichtung 31 und/oder eine Abnehmvorrichtung 32 im Bereich des Formbandes 7 angeordnet sind. Während die Absaugvorrichtung 31 nur mittels einer konzentrierten Absaugung, ähnlich wie ein Staubsauger, Teile der Matte 8 abnimmt, sie kann dafür mittels weitere Stelltriebe quer zur Laufrichtung der Matte 8 verschieblich angeordnet sein, kann sie bei einer überbreiten Ausführung auch die ganze Matte 8 vom Formband abnehmen. Die Abnehmvorrichtung 32 besteht im Ausführungsbeispiel nach Figur 4 aus einer gegen den Uhrzeigersinn rotierenden Walze und kämmt entgegen der Förderrichtung des Formbandes 7 die Matte 8 in eine ebenfalls höhenverstellbare Aufnahmevorrichtung, vorzugsweise ebenfalls als Absaugung ausgeführt. In Figur 4 ist auch deutlich dargestellt, wie die Untersuchungsvorrichtung 11 einen fehlerbehafteten Bereich 25 erkennt oder wie ein Fremdkörper 26 in der Matte 8 liegen kann. Eine Untersuchungsvorrichtung 11 besteht dabei vorzugsweise aus einer Durchstrahlungsvorrichtung, die aus einem Strahler 30 und einem Detektor 33 mit einer zugehörigen Auswerteeinheit (nicht dargestellt) besteht. Vorzugsweise kommen hierzu Röntgen- oder Gammastrahler in Betracht. Nachfolgend kann die ganze oder auch nur selektiv über die Breite Teile der Matte 8 nach einem Abwurf vom Formband 7 ausgeschieden werden, indem pneumatische Düsen 27 und/oder ein Weichensystem 28 und/oder eine Absaugvorrichtung 31 (nicht im Fallbereich eingezeichnet) angeordnet wird. Das Weichensystem 28 kann über die Breite der Matte 8 eine oder mehrere selektiv schaltbare Klappen aufweisen. Die gestrichelt gezeichneten Pfeile zeigen im Abwurfbereich nach dem Formband 7 den Weg der ausgeschiedenen Mattenteile bzw. der fehlerhaften Bereiche der Matte 8. Auch die pneumatischen Düsen 27 können über die Breite der Matte selektiv angesteuert werden. Dazu wird über ein Wegverfolgungssystem der Lauf des ermittelten fehlerbehafteten Bereiches 25 oder eines Fremdkörpers 26 verfolgt und rechtzeitig und lange genug die Klappen des Weichensystems 28 oder die pneumatischen Düsen 27 aktiviert.

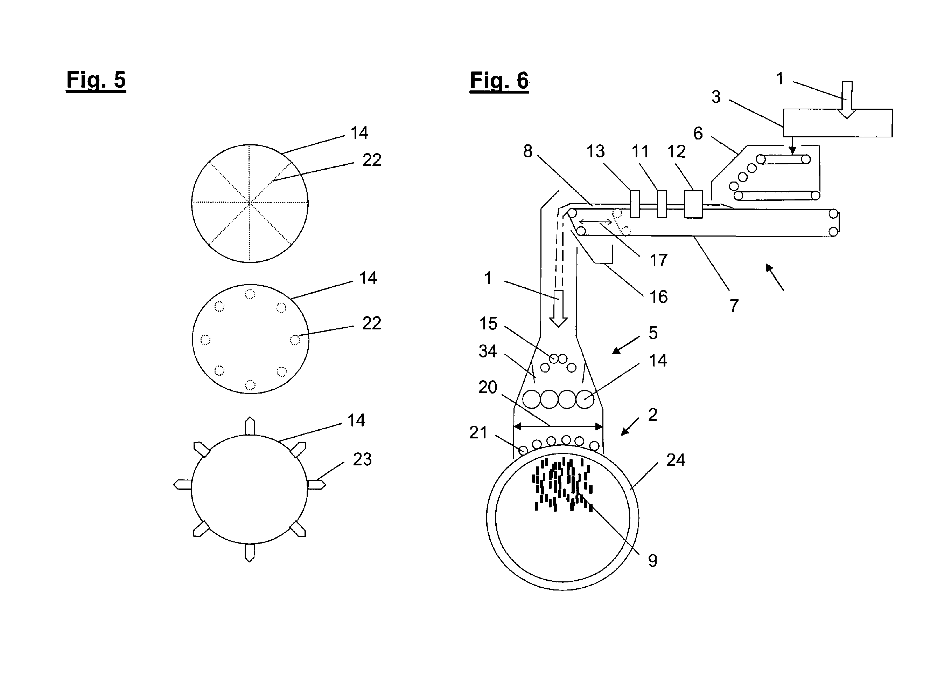

In Figur 5 sind in einer vergrößerten Seitenansicht mögliche Variationen von Speichenwalzen 14 angeordnet, die in der oberen Teilzeichnung geradlinige Speichen 22 aufweisen, die aber auch schaufelförmig gebogen sein können. In der mittigen Darstellung sind die Speichen 22 als Verbindungen zwischen den außen liegenden Scheiben der Speichenwalze 14 dargestellt, wobei die Verbindungen in einem Radius angeordnet sind und vorzugsweise aus Verbindungsrohren oder-stangen bestehen. In der unteren Teilzeichnung ist die Auflösewalze respektive die Speichenwalze 14 mit Stacheln 23 versehen. In einer zweistufigen Ausführungsform, insbesondere nach Figur 3, sind Vortragswalzen 15 in Fallrichtung der Biomasse 1 vor den Auflösewalzen, bzw. den Speichenwalzen 14 angeordnet. Im Rahmen der Erfindung ist es natürlich möglich auch andere Auflösungsverfahren- oder Vorrichtungen zu verwenden, um das Ziel einer ordentlichen Auflösung und/oder Verteilung der Biomasse vor oder über einer Pelletierpresse 2 zu erreichen.

In Figur 6 ist beispielhaft noch eine andere Variante einer Pelletierpresse 2 eingezeichnet, die aus einer rotierenden Ringmatrize 24 und an dieser anliegenden Kollerwalzen 21 besteht. In der besonders bevorzugten Ausführungsform wird nun eine über eine vorzugsweise gleiche Länge der Ringmatrize 24 respektive der Kollerwalzen 21 eine Matte 8 auf dem Formband 7 gestreut und oberhalb der Pelletierpresse 2 abgeworfen. Die während des Abwurfes bzw. des Fallens aufbrechende Matte 8 wird anschließend durch zumindest eine Auflösewalze, im vorliegenden Beispiel durch vier Speichenwalzen 14 aufgelöst und über die Verteilstrecke 20 gleichmäßig verteilt. Bei besonders hohen Durchsätzen oder anderen Anwendungsfällen, kann es notwendig sein, die Auflösevorrichtung 5 zweistufig auszuführen. Hierzu sind in Fallrichtung der Biomasse vor den Auflösewalzen noch Vortragswalzen 15 vorgesehen, die an den Anwendungsfalle angepasst werden oder ähnliche Aufbaugeometrien aufweisen wie die Speichenwalzen 14 nach Figur 5. Da durch die hergestellte gleichmäßige und vorzugsweise im Flächengewicht optimierte Matte in Längserstreckung der Pelletierpresse bereits eine Verteilung stattgefunden hat, wird nun annähernd über den Durchmesser, bzw. über die Verteilstrecke 20, die Matte verteilt und gleichzeitig homogen aufgelöst, so dass keine störenden Separierungen von Fein- und Grobgut oder Zusammenballungen in den Pressbereich der Pelletierpresse 2 gelangen. In der Auflösevorrichtung 5 können als Alternative zu den Leitklappen 18 auch Rechen 34 angeordnet sein.

Es wird deutlich, dass die Auflösevorrichtung 5 die gestreute Matte 8 nach den Figuren 2 und 6 unabhängig des Vorschubes des Formbandes 7, der Höhe der Matte 8 oder auch der Dichte der Matte 8 auflösen kann. Dies gilt besonders, wenn die Biomasse 1 zuvor durch eine Bedampfung und/oder Wasserbesprühung eine Neigung zur Verklebung aufweist.

### Bezugszeichenliste: DP1375EP

- 1.: Biomasse
- 2.: Pelletierpresse
- 3.: Biomassebunker
- 4.: Dosiervorrichtung
- 5.: Auflösevorrichtung
- 6.: Streuvorrichtung
- 7.: Formband
- 8.: Matte
- 9.: Pellets
- 10.: Fräswalze
- 11.: Untersuchungsvorrichtung
- 12.: Vorpresse
- 13.: Bedampfungseinrichtung
- 14.: Speichenwalze
- 15.: Vortragswalzen
- 16.: Abfallschacht
- 17.: Formbandrückzug
- 18.: Leitklappen
- 19.: Dosierschnecke
- 20.: Verteilstrecke
- 21.: Kollerwalzen
- 22.: Speichen
- 23.: Stachel
- 24.: Ringmatrize
- 25.: fehlerbehafteter Bereich
- 26.: Fremdkörper
- 27.: pneumatische Düsen
- 28.: Weichensystem
- 29.:
- 30.: Strahler
- 31.: Absaugvorrichtung
- 32.: Abnehmvorrichtung
- 33.: Detektor

## Patentansprüche

1. Verfahren zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und die Biomasse (1) nach der Aufbereitung in einem Biomassebunker (1) gelagert wird, **gekennzeichnet durch** den Ablauf folgender Verfahrensschritte:
1.1 die Biomasse (1) wird aus dem Biomassebunker (3) in eine Streuvorrichtung (6) ausgetragen,
1.2 mittels der Streuvorrichtung (6) wird auf einem Formband (7) eine Matte (8) aus der Biomasse (1) mit einem im wesentlichen gleichmäßigen Flächengewicht gebildet,
1.3 die auf dem Formband (7) hergestellte Matte (8) wird mittels einer Untersuchungsvorrichtung (11) auf fehlerbehaftete Stellen (25) und/oder Fremdkörper (26) untersucht und
1.4 die Matte (8) wird einer Pelletierpresse (2) zugeführt,
wobei zumindest Teile der Matte (8) oder ein Abschnitt der Matte (8) mit fehlerbehafteten Bereichen (25) und/oder Fremdkörpern (26) vor der Pelletierpresse (2) aus dem Verfahren zur Herstellung von Pellets (9) ausgeschieden werden.

2. Verfahren nach Anspruch 1, **dadurch gekennzeichnet, dass** fehlerbehaftete Bereiche (25) der Matte (8) und/oder Fremdkörper (26) und/oder Inhomogenitäten und/oder Dichteüberhöhungen mit schädlichen Eigenschaften für die Pelletierpresse (2) ermittelt und ausgeschieden werden.

3. Verfahren nach den Ansprüchen 1 oder 2, **dadurch gekennzeichnet, dass** als Untersuchungsvorrichtung (11) eine Wiegevorrichtung und/oder eine Durchstrahlungsvorrichtung verwendet wird.

4. Verfahren nach einem oder mehreren der vorhergehenden Ansprüche, **dadurch gekennzeichnet, dass** die Durchstrahlungsvorrichtung das Flächengewicht der Matte (8) in einem Raster von einem Quadratmillimeter zur Erkennung von fehlerbehafteten Bereichen (25) oder Fremdkörpern (26) auflöst.

5. Verfahren nach einem oder mehreren der vorhergehenden Ansprüche, **dadurch gekennzeichnet, dass** fehlerbehaftete Stellen (25) der Matte (8) abschnittsweise oder zumindest Teile der Matte (8) von dem Formband (7) abgenommen werden und/oder in einen Abfallschacht (16) überführt werden.

6. Verfahren nach einem oder mehreren der vorhergehenden Ansprüche, **dadurch gekennzeichnet, dass** zur Ausscheidung der fehlerbehafteten Bereiche (25) pneumatische Düsen (27) und/oder ein Weichensystem (28) und/oder ein Formbandrückzug (17) die Biomasse (1) in einen Abfallschacht (16) überführt.

7. Verfahren nach einem oder mehreren der vorhergehenden Ansprüche, **dadurch gekennzeichnet, dass** die Biomasse (1) der Matte (8) am Ende des Formbandes mit einer Fräswalze (10) und/oder in Fallrichtung vor der Pelletierpresse (2) mit einer Auflösevorrichtung (5) aufgelöst wird.

8. Verfahren nach einem oder mehreren der vorhergehenden Ansprüche, **dadurch gekennzeichnet, dass** Biomasse (1) verwendet wird, die während der Aufbereitung auf eine Größe über 0,3 mm (Siebmaschenweite) gesichtet wird.

9. Verfahren nach einem oder mehreren der vorhergehenden Ansprüche, **dadurch gekennzeichnet, dass** die Matte (8) aus Biomasse (1) mit Dampf in einer Bedampfungseinrichtung (13) durchströmt wird.

10. Verfahren nach einem oder mehreren der vorhergehenden Ansprüche, **dadurch gekennzeichnet, dass** die Matte (8) auf dem Formband (7) mit einer Vorpresse (12) verdichtet wird.

11. Verfahren nach einem oder mehreren der vorhergehenden Ansprüche, **dadurch gekennzeichnet, dass** als Pelletierpresse (2) eine Extruderpresse, eine Zweiwalzenpresse oder eine Ringmatrize mit zumindest einer innen oder außen angeordneten Kollerwalze verwendet wird.

12. Anlage zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und zur Lagerung der Biomasse (1) nach der Aufbereitung ein Biomassebunker (3) angeordnet ist, **dadurch gekennzeichnet, dass** im Herstellungsablauf nach dem Biomassebunker (3) eine Streuvorrichtung (6) und ein austragsseitig der Streuvorrichtung (6) in Fallrichtung horizontal endlos umlaufendem Formband (7) zur Erstellung einer Matte (8) mit einem im Wesentlichen gleichmäßigen Flächengewicht angeordnet ist und
dass einer Untersuchungsvorrichtung (11) für fehlerbehaftete Bereiche (25) und/oder für Fremdkörper (26) der Matte (8) im Bereich des Formbandes (7) und
dass zur Ausscheidung der fehlerbehafteten Bereiche (25) und/oder der Fremdkörper (26) vor der Pelletierpresse (2) zumindest eine Vorrichtung zur Ausscheidung von zumindest Teilen der Matte (8) oder eines ganzen Abschnittes der Matten (8) angeordnet sind.

13. Anlage nach Anspruch 12, **dadurch gekennzeichnet, dass** als Untersuchungsvorrichtung (11) eine Wiegevorrichtung und/oder eine Durchstrahlungsvorrichtung angeordnet ist.

14. Anlage nach den Ansprüchen 12 oder 13, **dadurch gekennzeichnet, dass** eine Durchstrahlungsvorrichtung zur Ermittlung des Flächengewichts mit eine Auflösung von 1 x 1 mm zur Erkennung von fehlerbehafteten Bereichen (25) und/oder Fremdkörpern (26) der Matte angeordnet ist.

15. Anlage nach einem oder mehreren der vorhergehenden Anlagenansprüche, **dadurch gekennzeichnet, dass** zur Ausscheidung der fehlerbehafteten Bereiche (25) und/oder der Fremdkörper (26) für einen Teilbereich der Matte (8) oder einen Abschnitt der Matte (8) in einen Abfallschacht (16) ein Formbandrückzug (17) und/oder eine Absaugvorrichtung (31) und/oder eine Abnehmvorrichtung (32) im Bereich des Formbandes (7) angeordnet sind.

16. Anlage nach einem oder mehreren der vorhergehenden Anlagenansprüche, **dadurch gekennzeichnet, dass** zur Ausscheidung der fehlerbehafteten Bereichen (25) und/oder der Fremdkörper (26) der Matte (8) im weiteren Produktionsablauf nach dem Formband (7) pneumatische Düsen (27) und/oder ein Weichensystem (28) und/oder eine Absaugvorrichtung (31) angeordnet ist.

17. Anlage nach einem oder mehreren der vorhergehenden Anlagenansprüche, **dadurch gekennzeichnet, dass** eine Auflösevorrichtung (5) zur Auflösung der fallenden Biomasse (1) zwischen dem Formband (7) und der Pelletierpresse (2) angeordnet ist.

18. Anlage nach einem oder mehreren der vorhergehenden Anlagenansprüche, **dadurch gekennzeichnet, dass** als Auflösevorrichtung (5) zumindest eine Auflösewalze, vorzugsweise als Speichenwalze (15) ausgeführt, angeordnet ist.

19. Anlage nach einem oder mehreren der vorhergehenden Anlagenansprüche, **dadurch gekennzeichnet, dass** als Pelletierpresse (2) eine Extruderpresse, eine Zweiwalzenpresse oder eine Ringmatrize mit zumindest einer innen oder außen angeordneten Kollerwalze angeordnet ist.

20. Anlage nach einem oder mehreren der vorhergehenden Anlagenansprüche, **dadurch gekennzeichnet, dass** Bereich des Formbandes (7) eine Bedampfungseinrichtung (13) angeordnet ist.

21. Anlage nach dem vorhergehenden Anspruch, **dadurch gekennzeichnet, dass** zur Durchströmung des Formbandes (7) ein Siebband als Formband (7) angeordnet ist.

22. Anlage nach einem oder mehreren der vorhergehenden Anlagenansprüche, **dadurch gekennzeichnet, dass** im Bereich des Formbandes (7) eine Vorpresse (12) angeordnet ist.
